# EUROPÄISCHE PATENTSCHRIFT

(11) **EP 1 403 614 B1**
(45) Veröffentlichungstag und Bekanntmachung des Hinweises auf die Patenterteilung: **06.05.2015**
(21) Anmeldenummer: 03019031.8
(22) Anmeldetag: 22.08.2003
(51) Int. Cl.: G01B 17/02, G01B 11/06, G01B 9/02, G01H 9/00

(54) **Messung der Wanddicke eines Rohres in einem Rohrwalzwerk mittels Laser-Ultraschall-Technik**
Measurement of the wall thickness of a tube in a mandrel mill by using laser ultrasound technique
Mesure de l'épaisseur de la paroi d'un tube dans un laminoir à tubes en utilisant la technique ultrasons laser

(30) Priorität: 25.09.2002 DE 10244554
(43) Veröffentlichungstag der Anmeldung: 31.03.2004
(73) Patentinhaber: SMS Meer GmbH, 41069 Mönchengladbach (DE)
(72) Erfinder: Sauerland, Martin, 41068 Mönchengladbach (DE); Deppe, Gerd-Joachim, 47809 Krefeld (DE)
(74) Vertreter: Grosse, Wolf-Dietrich Rüdiger

(56) Entgegenhaltungen:
- EP-A- 1 102 033
- WO-A-00/63641
- US-A- 4 966 459
- US-A- 5 080 491
- US-A- 5 137 361
- US-A- 6 041 020
- SHAN Q ET AL: "AN AUTOMATIC STABILIZATION SYSTEM FOR A CONFOCAL FABRY-PEROT INTERFEROMETER USED IN THE DETECTION OF LASER-GENERATED ULTRASOUND" ULTRASONICS, IPC SCIENCE AND TECHNOLOGY PRESS LTD. GUILDFORD, GB, Bd. 31, Nr. 2, 1993, Seiten 105-115, XP000345209 ISSN: 0041-624X

## Beschreibung

Die Erfindung betrifft ein Verfahren zur Messung der Wanddicke eines Rohres in einem Rohrwalzwerk unter Verwendung des Laser-Ultraschallverfahrens, bei dem mittels eines Anregungslasers in die Oberfläche des Rohres ein Ultraschallimpuls eingeleitet und das reflektierte Ultraschallsignal an der Oberfläche des Rohres mittels eines Beleuchtungslasers und eines Interferometers erfasst und in einer nachgeordneten Auswerteeinheit ausgewertet wird, wobei das Interferometer zwei Spiegel aufweist, die mittels eines Linearaktuators relativ zueinander in vorgebbarem Abstand positionierbar sind, und wobei zur Regelung des Abstands der Spiegel eine Fotodiode das durch die Spiegel transmittierte Licht misst und das von der Fotodiode gemessene Signal direkt oder indirekt einem Regler zugeleitet wird, der auf den Linearaktuator einwirkt. Des weiteren betrifft die Erfindung Vorrichtungen zur Messung der Wanddicke des Rohres.

In vielen Bereichen der Technik werden Rohre aus Stahl benötigt, die beispielsweise durch ein Verfahren hergestellt werden können, bei dem zylindrisch geformtes Ausgangsmaterial in einem Schrägwalzwerk unter Einsatz eines axial feststehenden Lochdorns zu einem rohrförmigen Hohlblock umgeformt wird. Zur Umformung des zylindrisch geformten Ausgangsmaterials zu einem nahtlosen Rohr wird das Ausgangsmaterial über den Lochdom gewalzt. Ein solches Verfahren ist beispielsweise aus der EP 0 940 193 A2 bekannt.

Beim Streckreduzierwalzen und beim Reduzier- und Maßwalzen nahtloser Stahlrohre durchläuft das zu bearbeitende Rohr eine Walzstraße, in der in Förderrichtung des Rohres hintereinander eine Anzahl Walzgerüste angeordnet sind. In jedem Walzgerüst sind Walzen gelagert, die beim Walzvorgang das Rohr jeweils um einen definierten Umfangsabschnitt kontaktieren. Insgesamt wirken dabei in jedem Walzgerüst mehrere, (beispielsweise drei) Walzen so zusammen, dass das Rohr im wesentlichen über seinen gesamten Umfang von den Walzen kontaktiert wird. Das Rohr wird damit auf einen reduzierten Durchmesser gewalzt und dabei auf eine genaue Form gebracht.

Das Rohr soll nach dem Walzen eine ideale Form haben, d. h. die zylindrische Kontur des Außenumfangs und die des Innenumfangs sollen zwei konzentrische Kreise bilden. Tatsächlich gibt es indes stets Toleranzen im Fertigrohr, so dass eine gewisse Exzentrizität der Kreiskontur des Innenumfangs relativ zu derjenigen des Außenumfangs vorliegt.

Ein entscheidender Qualitätsparameter bei der Rohrherstellung ist die Rohrwanddicke, die im Produktionsprozess gemessen und überwacht wird. Zur Ermittlung der Wanddicke des Rohres sind Ultraschall-Messverfahren bekannt. Ultraschall-Dicken-Messverfahren nach der Impuls-Echo-Methode ermitteln über die Laufzeitmessung eines Ultraschallimpulses die Wanddicke.

Dabei wird bei dem gattungsgemäßen Verfahren, wie es beispielsweise in der US 5,137,361 und in der WO 00/63641 beschrieben ist, ein Anregungslaser eingesetzt, der in die Oberfläche des Rohres einen Ultraschallimpuls einleitet; der Impuls breitet sich in Richtung des Rohrinneren aus und wird an der Innenwand reflektiert. Das an die Außenwand-Oberfläche zurücklaufende Signal wird dort erfasst, indem ein Beleuchtungslaser auf die Rohroberfläche gerichtet wird. Das reflektierte Signal wird einem Interferometer zugeleitet, wobei ein konfokales Fabry-Pérot-Interferometer zum Einsatz kommt. Eine Auswerteelektronik ermittelt den zeitlichen Abstand zwischen eingeleitetem und reflektiertem Ultraschallsignal bzw. zwei Echos der entstehenden Echofolge, woraus - bei bekannter Schallgeschwindigkeit im Rohr - die Wanddicke errechnet werden kann.

Das Fabry-Perot-Interferometer weist zwei Spiegel auf, die mittels eines Piezo-Linearaktuators relativ zueinander in einem vorgebbaren Abstand positioniert werden können. Dabei ist es wichtig, dass der Abstand der beiden Spiegel exakt (im Nanometerbereich) eingestellt wird, um eine zuverlässige Messung vornehmen zu können (diese muss im "steilen" Ast des Verlaufs der Intensität über der Frequenz des Lichts erfolgen). Hierzu wird bei der vorbekannten Lösung gemäß der US 5,137,361 mittels zweier Fotodioden einerseits das in das Interferometer eingeleitete und andererseits das durch das Interferometer transmittierte Licht gemessen und die Beaufschlagung des Piezo-Aktuators im geschlossenen Regelkreis unter Zugrundelegung des Verhältnisses beider Lichtintensitäten vorgenommen.

Es hat sich herausgestellt, dass mit dieser Vorgehensweise nicht sichergestellt ist, dass eine zuverlässige Messung der Wanddicke des Rohres unter den rauhen Umgebungsbedingungen eines Rohrwalzwerkes erfolgen kann. Es ist nicht ausreichend, nur auf das Fabry-Perot-Interferometer stabilisierend einzuwirken. Vielmehr sind Verbesserungen im gesamten Empfangszweig der Regelung erforderlich.

Aus der US 5 080 491 A ist eine Messtechnik unter Verwendung von zwei identischen Interferometern des Faby-Perot-Typs bekannt, um Geräusche aus Frequenzen eines Lasermittels zu unterdrücken. Durch die US 4 966 459 A ist eine berührungslose Dickenmessung von Materialien mit hohen Temperaturen bekannt geworden.

Der Erfindung liegt daher die Aufgabe zugrunde, ein Verfahren zur Messung der Rohrwanddicke unter Verwendung des Laser-Ultraschallverfahrens sowie eine zugehörige Vorrichtung zu schaffen, mit dem bzw. mit der es möglich ist, auch unter rauhen Umgebungsbedingungen im Walzwerk und wechselnden Reflexionsbedingungen am Messobjekt eine stabile und zuverlässige Ermittlung der Rohrwanddicke sicherstellen zu können.

Die Lösung dieser Aufgabe ist verfahrensgemäß dadurch gekennzeichnet, dass das von der Fotodiode gemessene Signal zum stabilen Regeln der Spiegel in einem vorgebbarem Abstand in Abhängigkeit eines aus dem Fertigungsprozess des Rohres und/oder aus dem Messprozess des reflektierten Ultraschallsignals stammenden Signals verändert und dem Regler zugeführt wird, wobei die Fotodiode mit einem Verstärker in Verbindung steht und die Veränderung des von der Fotodiode gemessenen Signals durch Veränderung der Verstärkung des Verstärkers erfolgt, wobei das von der Fotodiode gemessene Signal in Abhängigkeit der am Rohr gemessenen Temperatur verändert und dem Regler zugeführt wird. Das erfindungsgemäße Verfahren ist im Anspruch 1 definiert. Unter Veränderung des Signals, das durch die Fotodiode erzeugt und das dem Regler zugeleitet wird, ist zu verstehen, dass das Signal gemäß einem vorgegebenen Algorithmus so modifiziert wird, dass Störeinflüssen, die den Interferometerbetrieb instabilisieren, entgegengewirkt wird.

Vorzugsweise ist vorgesehen, dass das von der Fotodiode gemessene Signal in Abhängigkeit des Signals einer weiteren Fotodiode, die das in das Interferometer eingeleitete Licht misst, verändert und dem Regler zugeführt wird, wobei beide Fotodioden mit je einem Verstärker in Verbindung stehen, der das von der Fotodiode gemessene Signal verstärkt, und wobei die Verstärkungen der Verstärker in Abhängigkeit des Signals mindestens einer der Fotodioden in einem weiteren Regelkreis mit einem weiteren Regler gemäß einer vorgebbaren Führungsgröße geregelt werden.

Auf diese Weise wird sichergestellt, dass der optimale Betriebspunkt des Interferometers durch genaues Justieren des richtigen Abstands der Spiegel eingehalten wird, und das auch bei Schwankungen der Reflexionseigenschaften der Rohroberfläche.

Die Verstärkungen der Verstärker werden dabei vorzugsweise in Abhängigkeit des Signals der zweiten Fotodiode im Regelkreis gemäß der vorgebbaren Führungsgröße geregelt.

Mit Vorteil wird die Verstärkung mindestens einer der Verstärker in Abhängigkeit einer Störgröße geregelt, wobei die Störgröße über einen Summenbildner auf den Verstärker wirkt. Die Störgröße ist dabei bevorzugt die am Rohr gemessene Temperatur. Diese kann mittels eines Pyrometers gemessen werden.

Ein gutes Regelergebnis stellt sich ein, wenn gemäß einer Weiterbildung vorgesehen wird, dass der auf den Linearaktuator einwirkende Regler als hochdynamischer Regler ausgelegt ist. Dabei ist insbesondere an einen PID-Regler gedacht. Auch der auf die Verstärker einwirkende Regler kann als hochdynamischer Regler ausgelegt sein. Danach kommt auch für diesen ein PID-Regler in Frage. Es ist aber auch möglich, den letztgenannten Regler langsamer arbeiten zu lassen, wobei er dann mit Vorteil als PI-Regler ausgebildet ist.

Zur leichten Ermittlung der für den Regelprozess benötigen Führungsgrößen wird weiterhin vorgeschlagen, dass die Ermittlung der mindestens einen Führungsgröße des Regelkreises durch schrittweises Abtasten des Funktionsverlaufs vor der Aufnahme des Regelbetriebs erfolgt.

Als Interferometer hat sich besonders das Fabry-Perot-Interferometer bewährt. Als Linearaktuator kommt zumeist ein Piezo-Bewegungselement zum Einsatz, da mit diesem eine hochgenaue Positionierung erfolgen kann. Die Verstärker können mit Vorteil mit einer logarithmischen Kennlinie versehen werden, um die Regelung effizient zu gestalten. Die zum Einsatz kommenden Regler werden bevorzugt als digitale Regler ausgebildet. In ihnen werden die Regelalgorithmen gemäß einer Weiterbildung durch Differenzengleichungen abgebildet.

Als besonders vorteilhaft hat es sich erwiesen, wenn additiv zu den vorgeschlagenen regelungstechnischen Maßnahmen auch Vorkehrungen getroffen werden, die eine hohe Dämpfung des Interferometers gegen Körper- und/oder LuftschallSchwingungen sicherstellen.

Im Rahmen der Erfindung werden ebenfalls Vorrichtungen zur Messung der Wanddicke eines Rohres in einem Rohrwalzwerk vorgeschlagen. Die erfindungsgemäßen Vorrichtungen sind in den Ansprüchen 13 und 14 definiert.

Die Vorrichtung zur Messung der Rohrwanddicke weist unter anderen eine Laser-UltraschallMessvorrichtung mit einem Anregungslaser, einem Beleuchtungslaser, einem Interferometer und einer nachgeordneten Auswerteeinheit auf, wobei das Interferometer zwei Spiegel hat, die mittels eines Linearaktuators relativ zueinander in vorgebbarem Abstand positionierbar sind; ferner hat die Vorrichtung eine Regeleinrichtung zur Regelung des Abstands der Spiegel mit einer Fotodiode, die das durch die Spiegel transmittierte Licht misst, und einem Regler, der aufgrund des von der Fotodiode stammenden Signals auf den Linearaktuator einwirkt, wobei der Regler mit einem die am Rohr herrschende Temperatur ermittelnden Pyrometer in Verbindung steht.

Zur Sicherstellung eines stabilen Arbeitspunktes des Interferometers weist die Vorrichtung eine weitere Fotodiode auf, die das in das Interferometer eingeleitete Licht misst, wobei beide Fotodioden mit je einem Verstärker in Verbindung stehen, der das von der Fotodiode gemessene Signal verstärkt, und ein Regelkreis vorhanden ist, der die Verstärkungen der Verstärker in Abhängigkeit der Signale der Fotodioden mit einem Regler auf vorgebbare Werte regelt.

Mit Vorteil steht der Verstärker mit einem Summenbildner zur Aufschaltung einer Störgröße auf den Verstärker in Verbindung.

Die Verstärker können eine logarithmische Kennlinie aufweisen.

Eine besonders effiziente Regelung ergibt sich ferner, wenn weiterbildungsgemäß ein Differenzbildner zur Bestimmung der Differenz zwischen den von den beiden Fotodioden ermittelten Signalen zur Zuführung der Differenz zum Regler vorgesehen wird.

Zur Sicherstellung einer optimalen Dämpfung des Interferometers gegen Körperund/oder Luftschall-Schwingungen ist dieses gemäß einer Fortbildung auf einem gedämpften Träger angeordnet. An der Unterseite des Trägers können spezielle Absorberfüße bzw. Dämpfelemente angeordnet sein (es kann dabei insbesondere auch die aus dem Hi-Fi-Bereich bekannte String-Technik zum Einsatz kommen). Weiterhin kann das Interferometer zur Dämmung in einem zumindest weitgehend allseitig geschlossenen Behälter angeordnet werden; dieser besteht vorzugsweise aus Holz.

Der Behälter kann an seiner Innenseite mit plattenförmigen Dämpfelementen versehen werden, die mit Vorteil aus Fasern mittlerer Dichte bestehen. Schließlich wird das Dämpfverhalten weiter optimiert, wenn zwischen den plattenförmigen Dämpfelementen und der Innenseite des Behälters Schaumstoff angeordnet wird.

Insgesamt ergibt sich eine Messanordnung zur Messung der Wanddicke des Rohrs im Rohrwalzwerk, die sich durch einen hohen Grad an Stabilität auszeichnet, so dass auch unter rauhen Umgebungseinflüssen im Walzwerk sichergestellt ist, dass Störeinflüsse keine negative Auswirkung auf die Qualität der Messung haben. Die Maßnahmen sind relativ einfach umsetzbar, so dass die Messeinrichtung kostengünstig realisiert werden kann.

In der Zeichnung sind unter anderen Ausführungsbeispiele der Erfindung dargestellt. Es zeigen:
- Fig. 1: schematisch den Aufbau einer erfindungsgemäßen Vorrichtung zur Messung der Wanddicke eines Rohres in einem Walzwerk, wobei insbesondere die regelungstechnischen Einrichtungen skizziert sind,
- Fig. 2: ein Beispiel einer Vorrichtung zur Messung der Rohrwanddicke
- Fig. 3: eine weitere alternative Ausgestaltung einer erfindungsgemäßen Vorrichtung
- Fig. 4: schematisch die schwingungsgedämpfte Behausung des zum Einsatz kommenden Interferometers,
- Fig. 5: schematisch das Prinzip der Messung der Wanddicke eines Rohres und
- Fig. 6: schematisch den Verlauf der im Interferometer gemessenen Intensität über der Frequenz des Lichts.

Zunächst soll kurz auf das Prinzip der Messung der Wanddicke eines Rohres mittels des Laser-Ultraschall-Verfahrens unter Verwendung eines Fabry-Perot-Interferometers eingegangen werden.

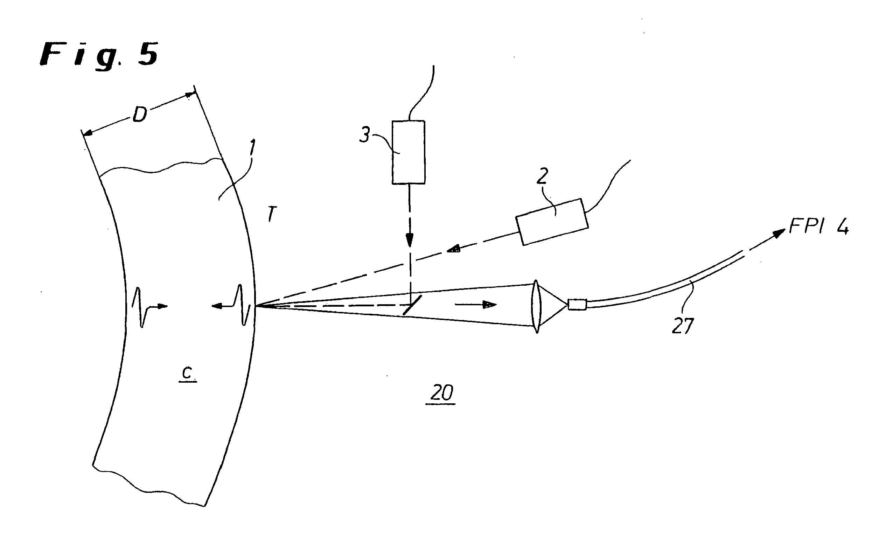

In Fig. 5 ist das Messprinzip skizziert: Die Wanddicke D eines gewalzten Rohres 1 soll gemessen werden. Es kommt eine Laser-Ultraschall-Wanddicken-Messvorrichtung 20 zum Einsatz, die auf das klassische Prinzip der Ultraschall-Laufzeitmessung abstellt. Aus der Zeit für das - zweimalige - Durchlaufen eines Ultraschallimpulses durch die Wand des Rohres 1 ergibt sich bei bekannter Schallgeschwindigkeit c im Material des Rohres 1 die gesuchte Wanddicke D. Die Ankopplung des Ultraschalls bei der Heißwanddickenmessung mit Temperaturen T im Bereich von ca. 1.000 °C erfordert sowohl auf der Anregungs- als auch auf der Detektionsseite berührungslose, optische Methoden, bei denen der Messkopf selber in einem thermisch sicheren Abstand zum Rohr 1 verbleiben kann.

Hochenergetische Licht-Pulse im Infrarotbereich werden in der Rohroberfläche absorbiert. Sie werden z. B. von einem auf die Rohrwand ausgerichteten, blitzlampen-gepumpten Nd:YAG-Laser 2 (Anregungslaser) erzeugt, der eine Wellenlänge von 1.064 nm bei einer Pulsdauer von weniger als 10 ns haben kann. Die vom Laser 2 auf die Rohroberfläche aufgebrachte Energie, die von der Rohrwand absorbiert wird, führt teilweise zur Verdampfung einer sehr dünnen Oberflächenschicht (Materialablation im nm-Bereich). Durch den Verdampfungs-Impuls entsteht - wegen der Impulserhaltung - im Rohr 1 ein Ultraschall-Impuls, der senkrecht zur Rohroberfläche in die Rohrwand läuft. Der Ultraschall-Impuls wird an der Rohr-Innenoberfläche reflektiert, läuft zurück zur Rohr-Außenoberfläche, wird erneut reflektiert usw., so dass in der Rohrwand eine Ultraschall-Echofolge abnehmender Amplitude entsteht.

Der reflektierte Ultraschallimpuls erzeugt auf der Rohr-Außenoberfläche Schwingungen (im Sub-Miniaturbereich), die mittels eines zweiten Lasers 3 (Beleuchtungslaser) berührungslos unter Nutzung des Doppler-Effekts erfasst werden. Dieser Laser 3 kann ein CW-Laser sein (Continuous Wave Laser), beispielsweise ein in der Frequenz verdoppelter, diodengepumpter Nd:YAG-Laser, der mit einer Wellenlänge von 532 nm arbeitet und auf den Punkt der Anregung ausgerichtet ist. Die im Vergleich zur Lichtfrequenz niederfrequente Ultraschallschwingung führt zu einer Frequenz-Modulation des an der Materialoberfläche reflektierten Lichts.

Der reflektierte Lichtkegel, der jetzt "Träger" des Ultraschallsignales ist, wird über eine lichtstarke Sammellinse und einen Lichtwellenleiter 27 einem optischer Analysator, d. h. einem Demodulator, zugeführt, wobei insbesondere ein konfokales Fabry-Pérot-Interferometer zum Einsatz kommt; dessen Ausgangssignal beinhaltet bereits die Ultraschall-Echofolge.

Die weitere Verstärkung, Filterung und Signalauswertung der Ultraschall-Echofolge kann mit einer üblichen elektronischen Ultraschall-Auswerteeinheit erfolgen. Das Ausgangssignal der Auswerteeinheit ist die Wanddicke D des Rohres 1, die aus dem Produkt von Schallgeschwindigkeit c und gemessenem Zeitintervall bestimmt wird.

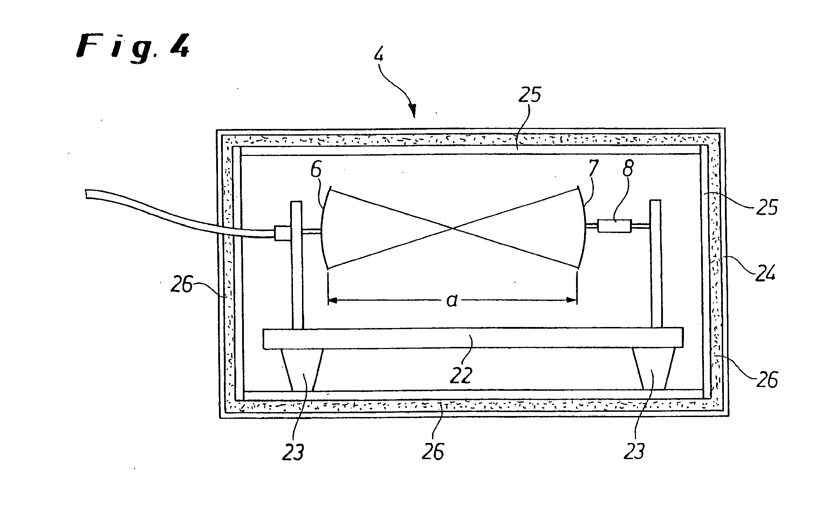

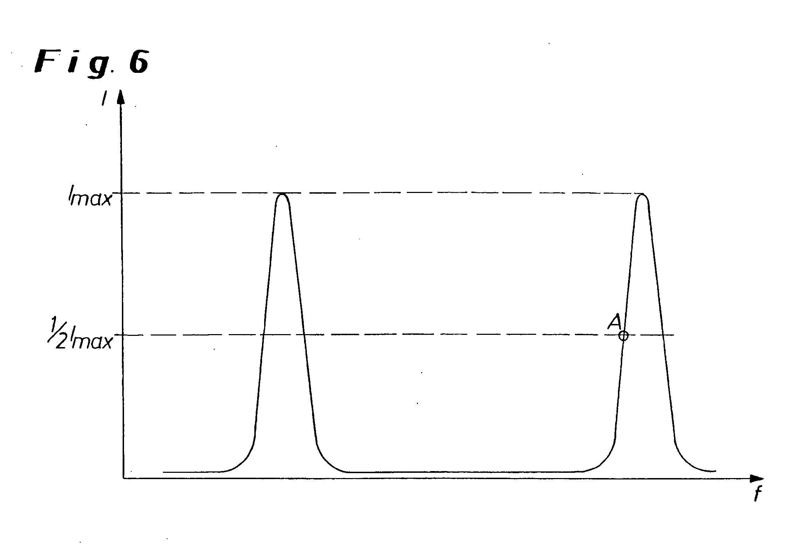

Im Fabry-Pérot-Interferometer 4, wie es schematisch in Fig. 4 skizziert ist, wird das durch den Lichtwellenleiter 27 zugeleitete Licht analysiert. Über der Frequenz f des Lichts ergibt sich - infolge von Resonanzen - eine Intensitätsverteilung, wie sie schematisch in Fig. 6 skizziert ist. Ein optimaler Arbeitspunkt A für die Wanddickenmessung ergibt sich dann, wenn die Messung im "steilen Ast" der Intensitätskurve erfolgt, wofür die beiden Spiegel 6 und 7 des Interferometers 4 (s. Fig. 4), die für Licht teildurchlässig ausgebildet sind, in einem definierten Abstand a relativ zueinander positioniert werden müssen. Als Sollwert für die Intensität wird - wie es Fig. 6 entnommen werden kann - der hälftige Wert der Maximalintensität Iₘₐₓ herangezogen, da bei diesem Wert die Flanke der Intensitätskurve am steilsten ist. Um diesen Arbeitspunkt A zu halten und damit die Resonanzbedingung des Interferometers permanent zu erfüllen, müssen die beiden Spiegel 6, 7 im Bereich von Nanometem exakt zueinander positioniert werden. Um dies bewerkstelligen zu können, wird ein Linearaktuator 8 in Form eines Piezo-Kristalls eingesetzt; mit diesem ist eine präzise Abstandseinstellung möglich.

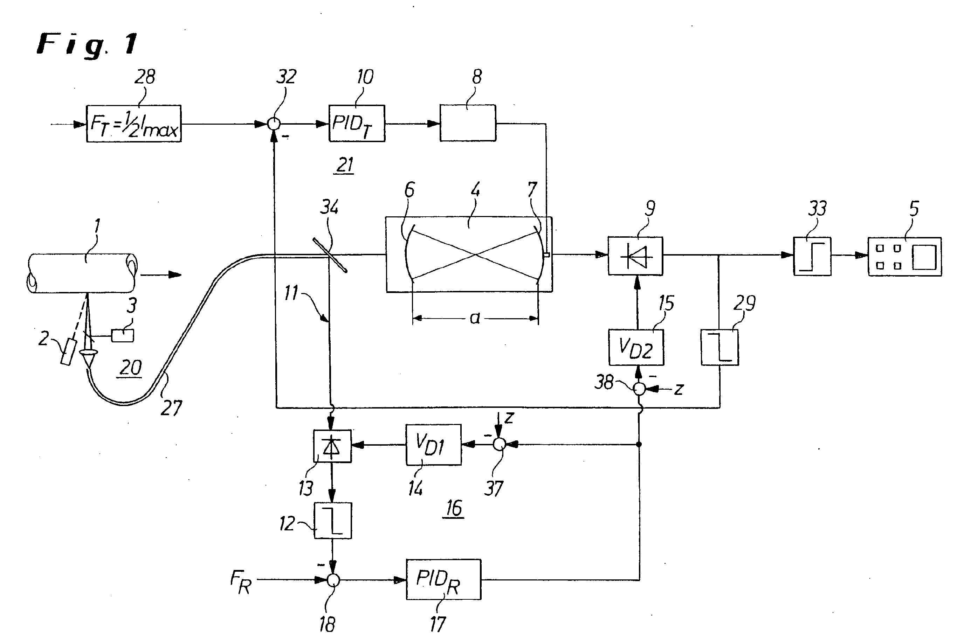

Die Maßnahmen, die ergriffen werden, um auch unter rauhen Umgebungsbedingungen in einem Rohrwalzwerk den optimalen Arbeitspunkt A des Interferometers 4 zu halten, gehen aus den Figuren 1 bis 4 hervor.

In Fig. 1 ist schematisch der Aufbau einer erfindungsgemäßen Vorrichtung zur Messung der Rohrwanddicke in einem Walzwerk skizziert, wobei insbesondere die regelungstechnische Einrichtung dargestellt ist. Das Rohr 1 wird in Pfeilrichtung durch den Auslauf eines Walzwerks transportiert. An dieser Stelle findet die Wanddickenmessung gemäß dem in Fig. 5 dargestellten Prinzip statt. Der Anregungslaser 2 erzeugt auf der Oberfläche des Rohres 1 einen Ultraschallimpuls, dessen Reflexion vom Beleuchtungslaser 3 aufgenommen und über den Lichtwellenleiter 27 dem Fabry-Perot-Interferometer 4 zugeleitet wird. Die beiden Spiegel 6 und 7 des Interferometers 4 befinden sich in vorgegebenem Abstand a, der über den Linearaktuator 8 in Form eines Piezo-Verstellelements exakt eingestellt wird. Das Ausgangssignal des Interferometers 4 wird in der Auswerteeinheit 5 ausgewertet, d. h. dort wird aus der Laufzeitdifferenz zwischen ausgesendetem und reflektiertem Ultraschallimpuls bzw. aus dem zeitlichen Abstand zweier Echos der entstehenden Echofolge die Wanddicke D des Rohres 1 bestimmt.

Vor Inbetriebnahme der Wanddickenmessvorrichtung wird zunächst das Intensitätsspektrum I über der Frequenz f des Lichtes aufgenommen, wie es sich aus Fig. 6 ergibt. Damit wird sowohl die maximale Iₘₐₓ als auch davon ausgehend der hälftige Wert von dieser ermittelt, so dass die Intensität I im Arbeitspunkt A festliegt.

Dieser Wert wird der in Fig. 1 skizzierten Regeleinrichtung 21 als Soll-Wert vorgegeben (Sollwertvorgabe 28; sie gibt die Führungsgröße F_{T} vor). Die Regeleinrichtung 21 weist einen Regler 10 auf, der als PID-Regler ausgeführt ist. Dieser steuert den Linearaktuator 8 an, der die beiden Spiegel 6 und 7 in definiertem Abstand a positioniert. Das durch das Interferometer 4 transmittierte Licht wird von einer Fotodiode 9 gemessen, die mit einem Verstärker 15 in Verbindung steht. Das von der Fotodiode 9 gemessene Signal gelangt über einen Tiefpass 29 zu einem Differenzbildner 32 und damit als rückgeführtes Signal in die Regeleinrichtung 21. Der Differenzbildner 32 subtrahiert das Signal von der vorgegebenen Führungsgröße F_{T} und leitet die Differenz dem Regler 10 zu.

Geeignete regelungstechnische Algorithmen haben demnach zur Folge, dass das Fabry-Pérot-Interferometer 4 im stabilen Arbeitspunkt A (s. Fig. 6) gehalten wird, weshalb die gesamte Messanordnung gegen äußere Störungen relativ unempfindlich reagiert.

Das von der Fotodiode 9 gemessene Lichtsignal wird - in ein elektrisches Signal umgewandelt - über einen Hochpass 33 der Auswerteeinheit 5 zugeleitet.

Damit die Regelung auch unter rauhen Walzwerksbedingungen stabil ist und auch nicht empfindlich auf sich ändernde Reflexionseigenschaften der Rohroberfläche reagiert, wird gemäß der Lösung nach Fig. 1 wie folgt vorgegangen:

Ein Strahlteiler 34 leitet einen Teil des vom Lichtwellenleiter 27 übertragenen Lichts zu einer zweiten Fotodiode 13. Diese steht mit einem Verstärker 14 in Verbindung. Sowohl der Verstärker 15 der Fotodiode 9 als auch der Verstärker 14 der Fotodiode 13 sind hinsichtlich ihrer jeweiligen Verstärkungen V_{D1} bzw. V_{D2} einstellbar. Zur Beeinflussung der Verstärkungen stehen die Verstärker 14 und 15 mit einem Regler 17 in einem geschlossenen Regelkreis 16. Diesem Regelkreis 16 wird eine Führungsgröße F_{R} vorgegeben. Diese Führungsgröße gelangt in den Regler 17, der als schnell arbeitender, hochdynamischer PID-Regler ausgeführt ist. Hinter dem Regler 17 und vor den Verstärkern 14 bzw. 15 befinden sich Summenbildner 37 und 38, über die eine Störgröße z aufgeschaltet werden kann. Bei dieser handelt es sich um die Temperatur T des Rohres 1 am Messort der Laser-Ultraschall-Messvorrichtung, wobei diese über ein - nicht dargestelltes - Pyrometer (beispielsweise über ein Einfarbenpyrometer oder ein Zweifarbenpyrometer (Quotientenpyrometer)) gemessen wird.

Der Regler 17 wirkt auf die Verstärker 14, 15 und passt deren Verstärkung V_{D1} bzw. V_{D2} so an, dass sich insgesamt ein stabiles Verhalten der gesamten Messeinrichtung ergibt. Der Regler 17 wird von der Fotodiode 13 über einen Tiefpass 12 (in Form eines Aliasing Filter) und einen Differenzbildner 18 beaufschlagt, in dem der gemessene Wert von der Führungsgröße F_{R} subtrahiert wird.

Dadurch, dass als Störgröße z die am Rohr 1 gemessene Temperatur aufgeschaltet werden kann, basiert die Anordnung gemäß Fig. 1 also - auch - darauf, dass das Signal 11 aus dem Messprozess mit als Größe herangezogen wird, mit der das von der Fotodiode 9 ermittelte Signal verändert und der Regeleinrichtung 21 und namentlich dem Regler 10 zugeführt wird.

Die Anordnung gemäß Fig. 1 ist also als zweischleifiger Regelkreis ausgeführt, bei dem in der ersten Regelschleife 21 das Interferometer 4 optimal eingestellt wird und in der Regelschleife 16 die Verstärkungen der Verstärker 14, 15 der Fotodioden 9, 13 nachgeführt werden, so dass sich diese im optimalen Arbeitspunkt befinden.

Dadurch, dass der Regler 17 die Verstärker 14 und 15 stellt, erfolgt eine Kopplung zur Regeleinrichtung 21; bei den beiden Regelkreisen bzw. Regeleinrichtungen 16 und 21 handelt es sich also um zwei gekoppelte Regelschleifen, wobei die Regeleinrichtung 21 Störungen nahe dem Fabry-Pérot-Interferometer 4 und der Regelkreis 16 Störungen aufgrund unterschiedlicher Reflexionsverhältnisse ausregelt.

Durch diese Ausgestaltung können Intensitätsschwankungen, wie sie durch unterschiedliche Reflexionseigenschaften an der Rohroberfläche auftreten können, ausgeregelt werden.

Die Ermittlung der Führungsgrößen F (F_{T}, F_{R}) vor Aufnahme des Betriebs der Wanddickenmessvorrichtung kann in einem "Scann"-Modus erfolgen. Dabei wird die Frequenzverlauf abgefahren und die Intensität im Interferometers 4 ermittelt und abgespeichert. Dies liefert dann den benötigen Wert F_{T} des halben Intensitäts-Peaks für den optimalen Arbeitspunkt A. Die Führungsgröße F_{R} für den Regelkreis 16 mit der Fotodiode 13 ist die zeitlich gemittelte, vor dem Interferometer 4 ausgekoppelte Lichtintensität.

Das Signal 11 aus dem Fertigungsprozess kann auch die von einem Pyrometer gemessene Temperatur des Rohres 1 sein, wobei das Pyrometer dann zusätzlich oder alternativ zu den Regelelementen Tiefpass 12, zweite Fotodiode 13, Verstärker 14 und/oder Differenzbildner 18 im Regelkreis 16 eingesetzt werden kann. Die Temperatur des Rohrs bzw. - allgemeiner gesprochen - eine Störgröße kann dann also direkt herangezogen werden, um die exakte Regelung des Abstands der Interferometer-Spiegel sicherzustellen. Da damit eine Zuleitung von Störgrößen direkt in den Regelkreis für den Spiegelabstand erfolgt, arbeitet das Interferometer besonders stabil in seinem optimalen Betriebs- oder Arbeitspunkt.

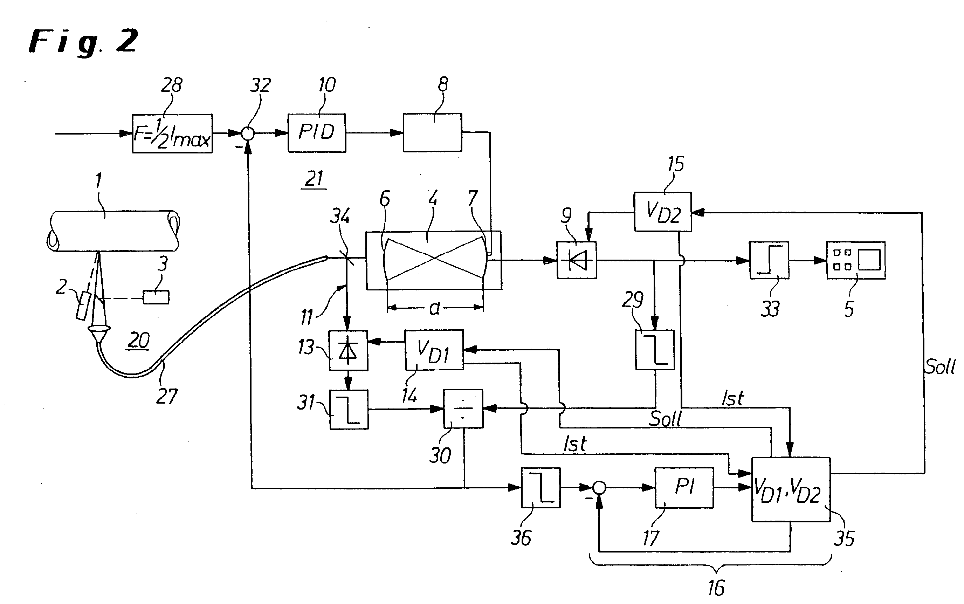

In Fig. 2 ist ein Beispiel einer Vorrichtung zur Messung der Rohrwanddicke. Das dem Fabry-Pérot-Interferometer 4 vom Lichtwellenleiter 27 zugeleitete Licht-Signal wird mittels eines Strahlteilers 34 geteilt; ein Teil des Lichtstrahls wird durch das Interferometer 4 gesendet, während der restliche Teil einer zweiten Fotodiode 13 zugeführt wird. Das zur Normierung des von der ersten Fotodiode 9 gemessenen Signals verwendete Signal 11 besteht wieder aus einem Signal aus dem Messprozess. Die zweite Fotodiode 13 leitet das von ihr gemessene Signal über den Tiefpass 31 dem Rechenelement 30 zu, genauso wie dies mit dem von der Fotodiode 9 gemessenen Signal geschieht. Im Rechenelement 30 findet die Berechnung eines Ausgangssignals unter Zugrundelegung der beiden Eingangssignale der ersten und zweiten Fotodiode 9, 13 statt. Dieses Ausgangssignal wird dem Differenzbildner 32 zugeleitet. Es erfolgt also eine Normierung der Intensität des durch das Interferometer transmittierten Lichts (gemessen mit der Fotodiode 9) mit dem von der Fotodiode 13 gemessenen Licht (Referenzstrahl).

Beide Fotodioden 9, 13 stehen mit je einem Verstärker 14 und 15 mit logarithmischer Kennlinie in Verbindung. Zur Erhöhung der Stabilität des Arbeitspunkts A des Interferometers 4 auch in rauhen Umgebungsbedingungen ist vorgesehen, dass auch hier über einen zweiten Regelkreis 16 auf die Verstärkungen V_{D1} und V_{D2} der Verstärker 14 und 15 eingewirkt wird; die Verstärkungen der Verstärker werden also geregelt verändert, um das Interferometer 4 an äußere Störeinflüsse anzupassen. Hierzu weist der zweite Regelkreis 16 einen Regler 17 in Form eines PI-Reglers auf, der ein Rechenelement 35 ansteuert, in dem mittels eines dort hinterlegten Algorithmus ein Soll-Wert für die Verstärkungen V_{D1}, V_{D2} der Verstärker 14 und 15 ermittelt wird. Diese Soll-Werte werden den jeweiligen Verstärkern 14, 15 zugeleitet. Der Regelkreis 16, der sein Eingangssignal über einen Tiefpass 36 erhält, überwacht auch die tatsächlichen Ist-Werte der Verstärkung in den Verstärkern 14, 15. Mittels des im Rechenelement 35 hinterlegten Algorithmus kann dabei sowohl die absolute Höhe der Verstärkungen verändert als auch das Verhältnis der beiden Verstärkungen zueinander beeinflusst werden.

Während die Regeleinrichtung 21 mit einem hochdynamischen PID-Regler 10 ausgestattet ist, ist für den Regelkreis 16 ein PI-Regler 17 vorgesehen, der die Regelgeschwindigkeit dieses Regelkreises im Vergleich mit derjenigen der Regeleinrichtung 21 langsam macht. Während also Abweichungen des durch das Interferometer 4 transmittierten Lichts sehr schnell ausgeregelt und auf Soll-Wert gebracht werden, werden die Verstärkungen V_{D1} und V_{D2} in den Verstärkern 14 und 15 nur relativ langsam ausgeregelt (hier reicht ein Reagieren von Rohr zu Rohr aus).

Das Ziel der Anordnung gemäß Fig. 2 ist wiederum, den Intensitätspegel am Ausgang des Interferometers ausreichend hoch und auf "halbem Transmissions-Peak-Niveau" (1/2 Iₘₐₓ) zu halten.

Bevorzugt wird die Regierausgangsgröße adaptiv so begrenzt, dass der Arbeitspunkt A auf der "Flanke" der Intensitätskurve normalerweise nicht verlassen werden kann.

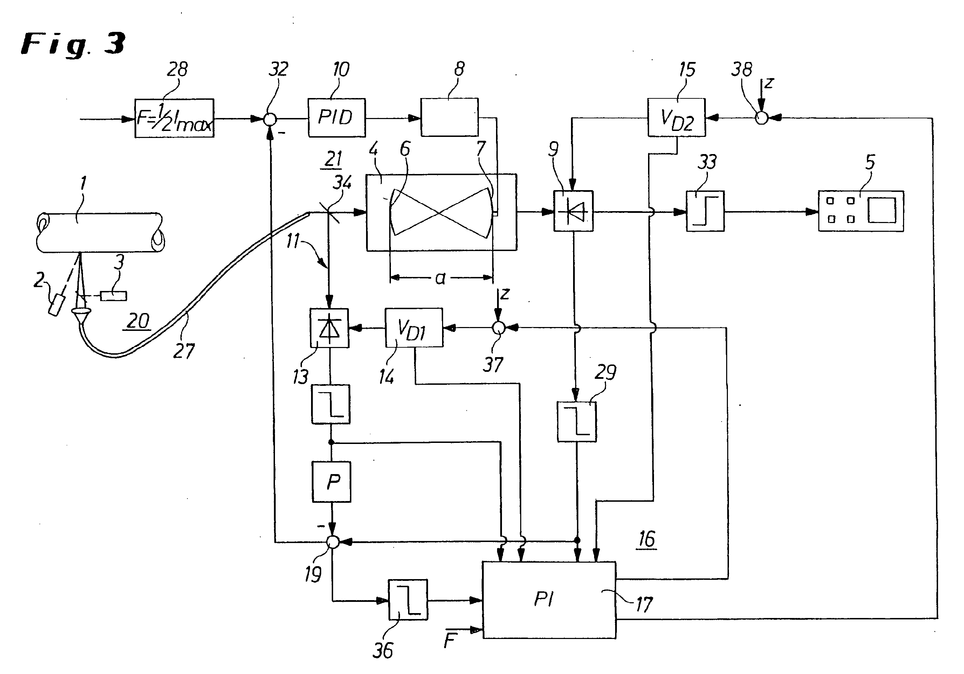

In Fig. 3 ist eine weitere Variante einer erfindungsgemäßen Vorrichtung mit regelungstechnischer Einrichtung skizziert, bei der statt der Normierung des Transmissionssignals auf das Referenzsignal - wie bei dem Beispiel gemäß Fig. 2 - die Differenz von Transmissions- und Referenzsignal die Reglereingangsgröße bildet. Weiterhin werden auch dort Störgrößen z, die beispielsweise von einem Pyrometer abgegriffen werden können, in die Regelung mit einbezogen.

Hierzu ist ein Differenzbildner 19 vorgesehen, der das von der ersten Fotodiode 9 stammende Signal empfängt und von diesem das von der zweiten Fotodiode 13 stammende Signal abzieht. Die Differenz wird über den Differenzbildner 32 dem Regler 10 zugeführt.

Die schnelle Ausregelung von Schwankungen im Lichtsignal (Lichtpegeländerungen), das von der Fotodiode 9 gemessen wird, erfolgt mit dem hochdynamischen PID-Regler 10. Eine entsprechend langsame Regelung der Verstärkungen V_{D1} und V_{D2} der Verstärker 14 und 15 bzw. deren Verhältnis relativ zueinander erfolgt im langsam arbeitenden Regelkreis 16 mit dem PI-Regler 17.

Zusätzlich ist gemäß der Lösung nach Fig. 3 vorgesehen, dass Störgrößen z der Regelung aufgeschaltet werden können. Die Störgrößen z werden über die Summenbildner 37 und 38 bei der Ansteuerung der Verstärker 14 und 15 berücksichtigen. Bei diesen Störgrößen z handelt es sich wieder um die Temperatur T des Rohres 1, die über ein Pyrometer ermittelt wird.

In Fig. 4 sind die Maßnahmen skizziert, die ergriffen werden, um das Interferometer 4 noch besser gegen Luft- und Körperschall-Schwingungen zu dämpfen. Das Interferometer 4 befindet sich hierzu auf einem Träger 22, der aus hochdämpfendem Material besteht. Der Träger 22 steht mit speziellen Absorberfüßen 23 auf dem Boden eines Behälters 24, der aus Holz gefertigt ist. Holz ist in besonders guter Weise dazu geeignet, Schwingungen zu absorbieren. Um das Dämmvermögen gegen Schwingungen weiter zu erhöhen, sind die Innenwände des Behälters 24 aus Holz mit plattenförmigen Dämpfelemente 25 versehen. Die Dämpfelemente 25 bestehen aus Fasern mittlerer Dichte, die besonders gut zur Absorption von Schwingungen geeignet sind. Zwischen den Innenwänden des Behälters 24 und den plattenförmigen Dämpfelementen 25 ist Schaumstoff 26 eingespritzt, um dem Gesamtsystem eine optimale Dämpffähigkeit zu verleihen.

Durch die genannten Maßnahmen - sowohl regelungstechnischer als auch mechanischer Art - ist sichergestellt, dass das Interferometer 4 auch bei rauhen Umgebungsbedingungen im Umfeld eines Rohrwalzwerks und bei einer Änderung der optischen Oberflächeneigenschaften des Messgutes stabil arbeitet und die Messung der Wanddicke des Rohres 1 zuverlässig erfolgen kann.

### Bezugszeichenliste:

- 1: Rohr
- 2: Anregungslaser
- 3: Beleuchtungslaser
- 4: Interferometer (Fabry-Pérot-Interferometer FPI)
- 5: Auswerteeinheit
- 6: Spiegel
- 7: Spiegel
- 8: Linearaktuator (Piezo-Aktuator)
- 9: erste Fotodiode (Avalanche-Diode)
- 10: Regler
- 11: Signal aus dem Fertigungsprozess und/oder aus dem Messprozess
- 12: Tiefpass
- 13: zweite Fotodiode (Avalanche-Diode)
- 14: Verstärker
- 15: Verstärker
- 16: Regelkreis
- 17: Regler
- 18: Differenzbildner
- 19: Differenzbildner
- 20: Laser-Ultraschall-Messvorrichtung
- 21: Regeleinrichtung
- 22: Träger
- 23: Absorberfuß
- 24: Behälter
- 25: plattenförmiges Dämpfelement
- 26: Schaumstoff
- 27: Lichtwellenleiter
- 28: Sollwertvorgabe
- 29: Tiefpass
- 30: Rechenelement
- 31: Tiefpass
- 32: Differenzbildner
- 33: Hochpass
- 34: Strahlteiler
- 35: Rechenelement
- 36: Tiefpass
- 37: Summenbildner
- 38: Summenbildner

- a: Abstand
- T: Temperatur
- z: Störgröße
- D: Wanddicke des Rohrs
- c: Schallgeschwindigkeit
- A: Arbeitspunkt
- Iₘₐₓ: maximale Intensität
- f: Frequenz
- V_{D1}: Verstärkung
- V_{D2}: Verstärkung
- F: Führungsgröße
- F_{T}: Führungsgröße
- F_{R}: Führungsgröße

## Patentansprüche

1. Verfahren zur Messung der Wanddicke (D) eines Rohres (1) in einem Rohrwalzwerk unter Verwendung des Laser-Ultraschallverfahrens, bei dem mittels eines Anregungslasers (2) in die Oberfläche des Rohres (1) ein Ultraschallimpuls eingeleitet und das reflektierte Ultraschallsignal an der Oberfläche des Rohres (1) mittels eines Beleuchtungslasers (3) und eines Interferometers (4) erfasst und in einer nachgeordneten Auswerteeinheit (5) ausgewertet wird,
wobei das Interferometer (4) zwei Spiegel (6, 7) aufweist, die mittels eines Linearaktuators (8) relativ zueinander in vorgebbarem Abstand (a) positionierbar sind, und
wobei zur Regelung des Abstands (a) der Spiegel (6, 7) eine Fotodiode (9) das durch die Spiegel (6, 7) transmittierte Licht misst und das von der Fotodiode (9) gemessene Signal direkt oder indirekt einem Regler (10) zugeleitet wird, der auf den Linearaktuator (8) einwirkt,
**dadurch gekennzeichnet,**
**dass** das von der Fotodiode (9) gemessene Signal zum stabilen Regeln der Spiegel (6, 7) in einem vorgebbarem Abstand (a) in Abhängigkeit eines aus dem Fertigungsprozess des Rohres (1) und/oder aus dem Messprozess des reflektierten Ultraschallsignals stammenden Signals (11) verändert und dem Regler (10) zugeführt wird, wobei die Fotodiode (9) mit einem Verstärker (15) in Verbindung steht und die Veränderung des von der Fotodiode (9) gemessenen Signals durch Veränderung der Verstärkung des Verstärkers (15) erfolgt, wobei das von der Fotodiode (9) gemessene Signal in Abhängigkeit der am Rohr (1) gemessenen Temperatur (T) verändert und dem Regler (10) zugeführt wird.

2. Verfahren nach Anspruch 1,
**dadurch gekennzeichnet,**
**dass** das von der Fotodiode (9) gemessene Signal in Abhängigkeit des Signals einer weiteren Fotodiode (13), die das in das Interferometer (4) eingeleitete Licht misst, verändert und dem Regler (10) zugeführt wird,
wobei beide Fotodioden (9, 13) mit je einem Verstärker (14, 15) in Verbindung stehen, der das von der Fotodiode (9, 13) gemessene Signal verstärkt, und
wobei die Verstärkungen der Verstärker (14, 15) in Abhängigkeit des Signals mindestens einer der Fotodioden (9, 13) in einem Regelkreis (16) mit einem weiteren Regler (17) gemäß mindestens einer vorgebbaren Führungsgröße (F_{T}, F_{R}) geregelt werden.

3. Verfahren nach Anspruch 2,
**dadurch gekennzeichnet,**
**dass** die Verstärkungen der Verstärker (14, 15) in Abhängigkeit des Signals der weiteren Fotodiode (13) im Regelkreis (16) gemäß der vorgebbaren Führungsgröße (F_{R}) geregelt werden.

4. Verfahren nach einem der Ansprüche 1 bis 3,
**dadurch gekennzeichnet,**
**dass** die Verstärkung mindestens einer der Verstärker (14, 15) in Abhängigkeit einer Störgröße (z) geregelt wird, wobei die Störgröße (z) über mindestens einen Summenbildner (37, 38) auf den mindestens einen Verstärker (14, 15) wirkt.

5. Verfahren nach Anspruch 4,
**dadurch gekennzeichnet,**
**dass** die Störgröße (z) die am Rohr (1) gemessene Temperatur (T) ist.

6. Verfahren nach einem der Ansprüche 1 bis 5,
**dadurch gekennzeichnet,**
**dass** die am Rohr (1) herrschende Temperatur (T) mittels eines Pyrometers gemessen wird.

7. Verfahren nach einem der Ansprüche 1 bis 6,
**dadurch gekennzeichnet,**
**dass** der auf den Linearaktuator (8) einwirkende Regler (10) als hochdynamischer Regler ausgelegt ist.

8. Verfahren nach Anspruch 7,
**dadurch gekennzeichnet,**
**dass** der auf den Linearaktuator (8) einwirkende Regler (10) als PID-Regler ausgebildet ist.

9. Verfahren nach einem der Ansprüche 2 bis 8,
**dadurch gekennzeichnet,**
**dass** der auf die Verstärker (14, 15) einwirkende weitere Regler (17) als hochdynamischer Regler ausgelegt ist.

10. Verfahren nach Anspruch 9,
**dadurch gekennzeichnet,**
**dass** der auf die Verstärker (14, 15) einwirkende weitere Regler (17) als PID-Regler ausgebildet ist.

11. Verfahren nach einem der Ansprüche 2 bis 8,
**dadurch gekennzeichnet,**
**dass** der auf die Verstärker (14, 15) einwirkende weitere Regler (17) als PI-Regler ausgebildet ist.

12. Verfahren nach Anspruch 2,
**dadurch gekennzeichnet,**
**dass** die Ermittlung der mindestens einen Führungsgröße (F_{T}, F_{R}) des Regelkreises (16, 21) durch schrittweises Abtasten des Funktionsverlaufs vor der Aufnahme des Regelbetriebs erfolgt.

13. Vorrichtung zur Messung der Wanddicke (D) eines Rohres (1) in einem Rohrwalzwerk, insbesondere zur Durchführung des Verfahrens nach einem der Ansprüche 1 bis 12, die aufweist:
eine Laser-Ultraschall-Messvorrichtung (20) mit einem Anregungslaser (2), einem Beleuchtungslaser (3), einem Interferometer (4) und einer nachgeordneten Auswerteeinheit (5), wobei aus Interferometer (4) zwei Spiegel (6, 7) aufweist, die mittels eines zur Vorrichtung gehörenden Linearaktuators (8) relativ zueinander in vorgebbarem Abstand (a) positionierbar sind, und
eine Regeleinrichtung (21) zur Regelung des Abstands (a) der Spiegel (6, 7) mit einer Fotodiode (9), die das durch die Spiegel (6, 7) transmittierte Licht misst, und einem Regler (10), der aufgrund des von der Fotodiode (9) stammenden Signals auf den Linearaktuator (8) einwirkt,
**dadurch gekennzeichnet, dass** die Vorrichtung
Mittel zur Erfassung eines aus dem Fertigungsprozess des Rohres (1) stammenden Signals (11) aufweist, die das Signal (11) dem Regler (10) zuleiten, der den Linearaktuator (8) zur Positionierung der beiden Spiegel (6, 7) in definiertem Abstand (a) ansteuert, wobei das Mittel ein Pyrometer zur Messung der am Rohr (1) herrschenden Temperatur (T) ist.

14. Vorrichtung zur Messung der Wanddicke (D) eines Rohres (1) in einem Rohrwalzwerk, insbesondere zur Durchführung des Verfahrens nach einem der Ansprüche 1 bis 12, die aufweist:
eine Laser-Ultraschall-Messvorrichtung (20) mit einem Anregungslaser (2), einem Beleuchtungslaser (3), einem Interferometer (4) und einer nachgeordneten Auswerteeinheit (5), wobei das Interferometer (4) zwei Spiegel (6, 7) aufweist, die mittels eines zur Vorrichtung gehörenden Linearaktuators (8) relativ zueinander in vorgebbarem Abstand (a) positionierbar sind, und
eine Regeleinrichtung (21) zur Regelung des Abstands (a) der Spiegel (6, 7) mit einer Fotodiode (9), die das durch die Spiegel (6, 7) transmittierte Licht misst, und einem Regler (10), der aufgrund des von der Fotodiode (9) stammenden Signals auf den Linearaktuator (8) einwirkt,
eine weitere Fotodiode (13), die das in das Interferometer (4) eingeleitete Licht misst,
wobei beide Fotodioden (9, 13) mit je einem zur Vorrichtung gehörenden Verstärker (14, 15) in Verbindung stehen, der das von der Fotodiode (9, 13) gemessene Signal verstärkt,
**dadurch gekennzeichnet,**
**dass** die Vorrichtung ein die am Rohr (1) herrschende Temperatur ermittelndes Pyrometer und einen Regelkreis (16) mit einem weiteren Regler (17) aufweist, wobei der Regelkreis (16) die Verstärkungen der Verstärker (14, 15) in Abhängigkeit der Signale der Fotodioden (9, 13) mit dem weiteren Regler (17) auf vorgebbare Werte regelt und wobei der weitere Regler (17) mit dem Pyrometer in Verbindung steht.

15. Vorrichtung nach Anspruch 14,
**dadurch gekennzeichnet,**
**dass** der Verstärker (14, 15) mit einem Summenbildner (37, 38) zur Aufschaltung einer Störgröße (z) auf den Verstärker (14, 15) in Verbindung steht.

16. Vorrichtung nach Anspruch 14,
**dadurch gekennzeichnet,**
**dass** die Verstärker (14, 15) eine logarithmische Kennlinie aufweisen.

17. Vorrichtung nach einem der Ansprüche 14 bis 16,
**gekennzeichnet durch**
einen Differenzbildner (19) zur Bestimmung der Differenz zwischen den von den beiden Fotodioden (9, 13) ermittelten Signalen und Zuführung der Differenz zum Regler (10).

18. Vorrichtung nach einem der Ansprüche 13 bis 17,
**dadurch gekennzeichnet,**
**dass** das Interferometer (4) auf einem gegen Körper- und/oder LuftschallSchwingungen gedämpften Träger (22) angeordnet ist.

19. Vorrichtung nach Anspruch 18,
**dadurch gekennzeichnet,**
**dass** an der Unterseite des Trägers (22) Absorberfüße (23) angeordnet sind.

20. Vorrichtung nach Anspruch 18 oder 19,
**dadurch gekennzeichnet,**
**dass** das Interferometer (4) in einem allseitig geschlossenen Behälter (24) angeordnet ist.

21. Vorrichtung nach Anspruch 20,
**dadurch gekennzeichnet,**
**dass** der Behälter (24) aus Holz besteht.

22. Vorrichtung nach Anspruch 20 oder 21,
**dadurch gekennzeichnet,**
**dass** der Behälter (24) an seiner Innenseite mit plattenförmigen Dämpfelementen (25) versehen ist.

23. Vorrichtung nach Anspruch 22,
**dadurch gekennzeichnet,**
**dass** die Dämpfelemente (25) aus Fasern mittlerer Dichte bestehen.

24. Vorrichtung nach Anspruch 22 oder 23,
**dadurch gekennzeichnet,**
**dass** zwischen den plattenförmigen Dämpfelementen (25) und der Innenseite des Behälters (24) Schaumstoff (26) angeordnet ist.

## Claims

1. A method for measuring the wall thickness (D) of a pipe (1) in a pipe rolling mill using the laser ultrasonic method, in which an ultrasonic pulse is introduced into the surface of the pipe (1) by means of an excitation laser (2) and the reflected ultrasonic signal at the surface of the pipe (1) is detected by means of an illuminating laser (3) and an interferometer (4) and analysed in a downstream analysis unit (5),
wherein the interferometer (4) has two mirrors (6, 7), which can be positioned relatively to one another at a predetermined spacing (a) by means of a linear actuator (8), and
wherein, to control the spacing (a) of the mirrors (6, 7), a photodiode (9) measures the light transmitted by the mirrors (6, 7) and the signal measured by the photodiode (9) is fed directly or indirectly to a controller (10), which acts on the linear actuator (8),
**characterised**
**in that** the signal measured by the photodiode (9) for the stable control of the mirrors (6, 7) at a predeterminable spacing (a) as a function of a signal (11) originating from the manufacturing process of the pipe (1) and/or from the measuring process of the reflected ultrasonic signal is changed and fed to the controller (10), wherein the photodiode (9) is connected to an amplifier (15) and the change of the signal measured by the photodiode (9) takes place by means of the change of the amplification of the amplifier (15), wherein the signal measured by the photodiode (9) is changed as a function of the temperature (T) measured at the pipe (1) and fed to the controller (10).

2. The method according to Claim 1,
**characterised**
**in that** the signal measured by the photodiode (9) is changed as a function of the signal of a further photodiode (13), which measures the light introduced into the interferometer (4), and fed to the controller (10),
wherein the two photodiodes (9, 13) are each connected to an amplifier (14, 15), which amplifies the signal measured by the photodiode (9, 13), and
wherein the amplifications of the amplifiers (14, 15) are controlled as a function of the signal of at least one of the photodiodes (9, 13) in a control loop (16) with a further controller (17) according to at least one predeterminable reference variable (F_{T}, F_{R}).

3. The method according to Claim 2,
**characterised**
**in that** the amplifications of the amplifiers (14, 15) are controlled as a function of the signal of the further photodiode (13) in the control loop (16) according to the predeterminable reference variable (F_{R}).

4. The method according to one of Claims 1 to 3,
**characterised**
**in that** the amplification of at least one of the amplifiers (14, 15) is controlled as a function of a disturbance variable (z), wherein the disturbance variable (z) acts on the at least one amplifier (14, 15) via at least one sum former (37, 38).

5. The method according to Claim 4,
**characterised**
**in that** the disturbance variable (z) is the temperature (T) measured at the pipe (1).

6. The method according to one of Claims 1 to 5,
**characterised**
**in that** the temperature (T) prevailing at the pipe (1) is measured by means of a pyrometer.

7. The method according to one of Claims 1 to 6,
**characterised**
**in that** the controller (10) acting on the linear actuator (8) is configured as a highly dynamic controller.

8. The method according to Claim 7,
**characterised**
**in that** the controller (10) acting on the linear actuator (8) is constructed as a PID controller.

9. The method according to one of Claims 2 to 8,
**characterised**
**in that** the further controller (17) acting on the amplifiers (14, 15) is configured as a highly dynamic controller.

10. The method according to Claim 9,
**characterised**
**in that** the further controller (17) acting on the amplifiers (14, 15) is constructed as a PID controller.

11. The method according to one of Claims 2 to 8,
**characterised**
**in that** the further controller (17) acting on the amplifiers (14, 15) is constructed as a PI controller.

12. The method according to Claim 2,
**characterised**
**in that** the determination of the at least one reference variable (F_{T}, F_{R}) of the control loop (16, 21) takes place by means of step-by-step sensing of the function curve before the start of the control operation.

13. A device for measuring the wall thickness (D) of a pipe (1) in a pipe rolling mill, particularly for carrying out the method according to one of Claims 1 to 12, which has:
a laser ultrasonic measuring device (20) with an excitation laser (2), an illuminating laser (3), an interferometer (4) and a downstream analysis unit (5), wherein the interferometer (4) has two mirrors (6, 7), which can be positioned relatively to one another at a predetermined spacing (a) by means of a linear actuator (8) belonging to the device, and
a control apparatus (21) for controlling the spacing (a) of the mirrors (6, 7) using a photodiode (9), which measures the light transmitted by the mirrors (6, 7), and a controller (10), which acts on the linear actuator (8) on the basis of the signal originating from the photodiode (9),
**characterised in that** the device
has means for detecting a signal (11) originating from the manufacturing process of the pipe (1), which means feed the signal (11) to the controller (10), which controls the linear actuator (8) for positioning the two mirrors (6, 7) at a defined spacing (a), wherein the means is a pyrometer for measuring the temperature (T) prevailing at the pipe (1).

14. A device for measuring the wall thickness (D) of a pipe (1) in a pipe rolling mill, particularly for carrying out the method according to one of Claims 1 to 12, which has:
a laser ultrasonic measuring device (20) with an excitation laser (2), an illuminating laser (3), an interferometer (4) and a downstream analysis unit (5), wherein the interferometer (4) has two mirrors (6, 7), which can be positioned relatively to one another at a predetermined spacing (a) by means of a linear actuator (8) belonging to the device, and
a control apparatus (21) for controlling the spacing (a) of the mirrors (6, 7) using a photodiode (9), which measures the light transmitted by the mirrors (6, 7), and a controller (10), which acts on the linear actuator (8) on the basis of the signal originating from the photodiode (9),
a further photodiode (13), which measures the light introduced into the interferometer (4),
wherein the two photodiodes (9, 13) are each connected to an amplifier (14, 15) belonging to the device, which amplifies the signal measured by the photodiode (9, 13),
**characterised**
**in that** the device has a pyrometer ascertaining the temperature prevailing at the pipe (1) and a control loop (16) with a further controller (17), wherein the control loop (16) controls the amplifications of the amplifiers (14, 15) to predeterminable values as a function of the signals of the photodiodes (9, 13) using the further controller (17), and wherein the further controller (17) is connected to the pyrometer.

15. The device according to Claim 14,
**characterised**
**in that** the amplifier (14, 15) is connected to a sum former (37, 38) for connecting a disturbance variable (z) to the amplifier (14, 15).

16. The device according to Claim 14,
**characterised**
**in that** the amplifiers (14, 15) have a logarithmic characteristic.

17. The device according to one of Claims 14 to 16,
**characterised by**
a difference former (19) for determining the difference between the signals detected by the two photodiodes (9, 13) and feeding the difference to the controller (10).

18. The device according to one of Claims 13 to 17,
**characterised**
**in that** the interferometer (4) is arranged on a support (22) damped against structural and/or airborne-sound vibrations.

19. The device according to Claim 18,
**characterised**
**in that** absorber feet (23) are arranged on the underside of the support (22).

20. The device according to Claim 18 or 19,
**characterised**
**in that** the interferometer (4) is arranged in a container (24) that is closed on all sides.

21. The device according to Claim 20,
**characterised**
**in that** the container (24) consists of wood.

22. The device according to Claim 20 or 21,
**characterised**
**in that** the container (24) is provided with plate-shaped damping elements (25) on its inside.

23. The device according to Claim 22,
**characterised**
**in that** the damping elements (25) consist of fibres of medium density.

24. The device according to Claim 22 or 23,
**characterised**
**in that** foam (26) is arranged between the plate-shaped damping elements (25) and the inside of the container (24).

## Revendications

1. Procédé pour mesurer l'épaisseur de paroi (D) d'un tube (1) dans un laminoir à tubes en faisant appel au procédé ultrasonore à laser, dans lequel, à l'aide d'un laser d'excitation (2), une impulsion ultrasonore est induite dans la surface du tube (1) et le signal ultrasonore réfléchi à la surface du tube (1) étant capté au moyen d'un laser d'éclairage (3) et d'un interféromètre (4) et étant évalué dans une unité d'évaluation (5) disposée en aval,
l'interféromètre (4) présentant deux miroirs (6, 7), lesquels peuvent être positionnés à une distance (a) prédéfinissable l'un par rapport à l'autre au moyen d'un actionneur linéaire (8), et
pour le réglage de la distance (a) des miroirs (6, 7), une photodiode (9) mesurant la lumière transmise par les miroirs (6, 7), et le signal mesuré par la photodiode (9) étant amené directement ou indirectement à un régulateur (10) qui agit sur l'actionneur linéaire (8),
**caractérisé en ce que**
le signal mesuré par la photodiode (9) pour le réglage stable des miroirs (6, 7) à une distance (a) prédéfinissable est modifié en fonction d'un signal (11) issu du processus de fabrication du tube (1) et/ou du processus de mesure du signal ultrasonore réfléchi et est amené au régulateur (10), la photodiode (9) étant en liaison avec un amplificateur (15) et la modification du signal mesuré par la photodiode (9) s'effectuant par modification de l'amplification de l'amplificateur (15), le signal mesuré par la photodiode (9) étant modifié en fonction de la température (T) mesurée au niveau du tube (1) et étant amené au régulateur (10).

2. Procédé selon la revendication 1, **caractérisé en ce que** le signal mesuré par la photodiode (9) est modifié en fonction du signal d'une autre photodiode (13), laquelle mesure la lumière induite dans l'interféromètre (4), et est amené au régulateur (10),
les deux photodiodes (9, 13) étant en liaison avec un amplificateur (14, 15) respectif qui amplifie le signal mesuré par la photodiode (9, 13), et
les amplifications des amplificateurs (14, 15) étant réglées en fonction du signal de l'une au moins des photodiodes (9, 13) dans un circuit de réglage (16) avec un autre régulateur (17) conformément à au moins une grandeur de référence (F_{T}, F_{R}) prédéfinissable.

3. Procédé selon la revendication 2, **caractérisé en ce que** les amplifications des amplificateurs (14, 15) sont réglées en fonction du signal de l'autre photodiode (13) dans le circuit de réglage (16) conformément à la grandeur de référence (F_{R}) prédéfinissable.

4. Procédé selon l'une des revendications 1 à 3, **caractérisé en ce que** l'amplification de l'un au moins des amplificateurs (14, 15) est réglée en fonction d'une grandeur perturbatrice (z), la grandeur perturbatrice (z) agissant par l'intermédiaire d'au moins un totalisateur (37, 38) sur cet au moins un amplificateur (14, 15).

5. Procédé selon la revendication 4, **caractérisé en ce que** la grandeur perturbatrice (z) est la température (T) mesurée au niveau du tube (1).

6. Procédé selon l'une des revendications 1 à 5, **caractérisé en ce que** la température (T) régnant au niveau du tube (1) est mesurée au moyen d'un pyromètre.

7. Procédé selon l'une des revendications 1 à 6, **caractérisé en ce que** le régulateur (10) agissant sur l'actionneur linéaire (8) est étudié en tant que régulateur ultra-dynamique.

8. Procédé selon la revendication 7, **caractérisé en ce que** le régulateur (10) agissant sur l'actionneur linéaire (8) est réalisé en tant que régulateur PID.

9. Procédé selon l'une des revendications 2 à 8, **caractérisé en ce que** l'autre régulateur (17) agissant sur les amplificateurs (14, 15) est étudié en tant que régulateur ultra-dynamique.

10. Procédé selon la revendication 9, **caractérisé en ce que** l'autre régulateur (17) agissant sur les amplificateurs (14, 15) est réalisé en tant que régulateur PID.

11. Procédé selon l'une des revendications 2 à 8, **caractérisé en ce que** l'autre régulateur (17) agissant sur les amplificateurs (14, 15) est réalisé en tant que régulateur PI.

12. Procédé selon la revendication 2, **caractérisé en ce que** la détermination de cette au moins une grandeur de référence (F_{T}, F_{R}) du circuit de réglage (16, 21) s'effectue par exploration progressive du déroulement du fonctionnement avant de passer au mode de réglage.

13. Dispositif pour mesurer l'épaisseur de paroi (D) d'un tube (1) dans un laminoir à tubes, en particulier pour la mise en oeuvre du procédé selon l'une des revendications 1 à 12, lequel présente :
un dispositif de mesure par ultrasons laser (20) avec un laser d'excitation (2), un laser d'éclairage (3), un interféromètre (4) et une unité d'évaluation (5) disposée en aval, l'interféromètre (4) présentant deux miroirs (6, 7), lesquels peuvent être positionnés à une distance (a) prédéfinissable l'un par rapport à l'autre au moyen d'un actionneur linéaire (8) faisant partie du dispositif, et
un dispositif de réglage (21) pour régler la distance (a) entre les miroirs (6, 7) avec une photodiode (9), laquelle mesure la lumière transmise par les miroirs (6, 7), et un régulateur (10) qui agit sur l'actionneur linéaire (8) sur la base du signal provenant de la photodiode (9),
**caractérisé en ce que** le dispositif présente des moyens pour détecter un signal (11) issu du processus de fabrication du tube (1), lesquels amènent le signal (11) au régulateur (10) qui commande l'actionneur linéaire (8) pour le positionnement des deux miroirs (6, 7) à une distance définie (a), le moyen étant un pyromètre pour la mesure de la température (T) qui règne au niveau du tube (1).

14. Dispositif pour mesurer l'épaisseur de paroi (D) d'un tube (1) dans un laminoir à tubes, en particulier pour la mise en oeuvre du procédé selon l'une des revendications 1 à 12, lequel présente :
un dispositif de mesure par ultrasons laser (20) avec un laser d'excitation (2), un laser d'éclairage (3), un interféromètre (4) et une unité d'évaluation (5) disposée en aval, l'interféromètre (4) présentant deux miroirs (6, 7), lesquels peuvent être positionnés à une distance (a) prédéfinissable l'un par rapport à l'autre au moyen d'un actionneur linéaire (8) faisant partie du dispositif, et
un dispositif de réglage (21) pour régler la distance (a) entre les miroirs (6, 7) avec une photodiode (9), laquelle mesure la lumière transmise par les miroirs (6, 7), et un régulateur (10) qui agit sur l'actionneur linéaire (8) sur la base du signal provenant de la photodiode (9),
une autre photodiode (13), laquelle mesure la lumière induite dans l'interféromètre (4),
les deux photodiodes (9, 13) étant en liaison avec respectivement un amplificateur (14, 15) faisant partie du dispositif, lequel amplifie le signal mesuré par la photodiode (9, 13),
**caractérisé en ce que**
le dispositif présente un pyromètre déterminant la température qui règne au niveau du tube (1) et un circuit de réglage (16) avec un autre régulateur (17), le circuit de réglage réglant l'amplification des amplificateurs (14, 15), en fonction des signaux des photodiodes (9, 13), avec l'autre régulateur (17), à des valeurs prédéfinissables, et l'autre régulateur (17) étant en liaison avec le pyromètre.

15. Dispositif selon la revendication 14, **caractérisé en ce que** l'amplificateur (14, 15) est en liaison avec un totalisateur (37, 38) pour la reprise d'une grandeur perturbatrice (z) dans l'amplificateur (14, 15).

16. Dispositif selon la revendication 14, **caractérisé en ce que** les amplificateurs (14, 15) présentent une courbe logarithmique.

17. Dispositif selon l'une des revendications 14 à 16, **caractérisé par** un différenciateur (19) pour la détermination de la différence entre les signaux déterminés par les deux photodiodes (9, 13) et faire parvenir la différence au régulateur (10).

18. Dispositif selon l'une des revendications 13 à 17, **caractérisé en ce que** l'interféromètre (4) est disposé sur un corps antagoniste et/ou un support (22) à amortissement des vibrations de bruit aérien.

19. Dispositif selon la revendication 18, **caractérisé en ce que** des pieds absorbants (23) sont disposés sur le dessous du support (22).

20. Dispositif selon la revendication 18 ou 19, **caractérisé en ce que** l'interféromètre (4) est disposé dans un conteneur (24) fermé de tous les côtés.

21. Dispositif selon la revendication 20, **caractérisé en ce que** le conteneur (24) se compose de bois.

22. Dispositif selon la revendication 20 ou 21, **caractérisé en ce que** le conteneur (24) est muni d'éléments d'amortissement en forme de plaquettes (25) sur son côté intérieur.

23. Dispositif selon la revendication 22, **caractérisé en ce que** les éléments d'amortissement (25) se composent de fibres d'une densité moyenne.

24. Dispositif selon la revendication 22 ou 23, **caractérisé en ce que** de la mousse (26) est disposée entre les éléments d'amortissement (25) en forme de plaquettes et le côté intérieur du conteneur (24).
